# EUROPEAN PATENT SPECIFICATION

(11) **EP 0 442 501 B1**
(45) Date of publication and mention of the grant of the patent: **18.06.1997**
(21) Application number: 91102109.5
(22) Date of filing: 14.02.1991
(51) Int. Cl.: G03B 17/30

(54) **Photographic film cassette**
Photographische Filmkassette
Coffret pour bobines de film photographique

(30) Priority: 15.02.1990 JP 34624/90; 13.04.1990 JP 98173/90
(43) Date of publication of application: 21.08.1991
(73) Proprietor: FUJI PHOTO FILM CO., LTD., Kanagawa (JP)
(72) Inventor: Takahashi, Koichi, Minami-Ashigara-shi, Kanagawa (JP)
(74) Representative: Grünecker, Kinkeldey, Stockmair & Schwanhäusser Anwaltssozietät

(56) References cited:
- DE-A- 2 734 321
- FR-A- 2 048 752
- GB-A- 1 343 615
- US-A- 4 834 306
- US-A- 4 846 418

## Description

### BACKGROUND OF THE INVENTION

The present invention relates to a photographic film cassette, as indicated in the preamble portion of claim 1 and more particularly to an improvement of a self-advancing film cassette capable of initially advancing the film smoothly by rotating the spool.

In a camera for use with a 135 film, unexposed photographic film is drawn from a film cassette for each exposure, positioned on an exposure aperture, and wound up in a film take-up chamber. When no further wind-up can be carried out, a rewinding shaft provided in a film loading chamber of the camera rotates the spool to rewind the film in the cassette shell. For this purpose, a recess is formed on an end of the spool for being fitted on a fork formed on the rewinding shaft. A pair of projections are formed inside the recess for rotating the spool in contact with the fork in rotation. In a conventional film cassette with 135 mm roll film contained therein, a leader of the film is protruded from the cassette shell. When the film cassette is loaded in the camera, the cassette shell is inserted in the film loading chamber while the film leader is carefully treated to position appropriately along a film passageway in the camera.

From document GB 13 43 615 a film cassette is known, comprising a spaol which is provided with two crossing ribs in a recess at the end of the spaol, which crossing ribs are to be engaged by a winding shaft. The ribs extend perpendicular to the rotary axis of the film spool.

Film cassettes according to the preamble portion of claim 1 for simplifying the loading operation have also recently been proposed as disclosed in U.S.P. 4,846,418. Another film cassette is already known from US-PS 4,834,306. In such a film cassette, the film leader is completely contained in the cassette shell, and can be advanced to the outside of the cassette shell by rotating the spool. According to U.S.P. 4,846,418, annular ridges are formed on the inside of the cassette shell for contact with the outermost turn of the wound film so as to prevent the film from loosening around the spool.

In such a film cassette requiring no attention for treating the film leader while loading the camera therewith, a construction is necessary for appropriately connecting the film passage mouth to a film passageway along the exposure aperture. Thus the cassette shell must be precisely positioned in the film loading chamber. It is already known from Japanese Utility Model Laid-Open Publication No. 49-75340 and Japanese Patent Laid-Open Publication No. 63-184750 to position the cassette shell correctly in the film loading chamber by forming a positioning portion on the cassette shell to be in contact with a receiving member formed on the inside of the film loading chamber.

However, there is a problem with a self-advancing film cassette in which the outermost turn of the film is in contact with the annular ridges. If the spool is axially deviated from the rewinding shaft of the camera, the rotation of the spool cause the annular ridges to excessively press or scratch a part of the outermost turn of the film. The film leader might not be advanced because the sliding friction is enlarged.

According to the constructions already known for positioning the film cassette in the film loading chamber, there is also a problem in low precision. Errors in assembly cause deviation in connecting the film passage mouth to the film passageway, because the positioning portion is formed on a shell component different from that having a film passage mouth according to the construction thus disclosed.

### OBJECTS OF THE INVENTION

It is therefore an object of the present invention to provide a photographic film cassette capable of advancing a leader of film smoothly and reliably to the outside of the cassette shell.

It is another object of the present invention to provide a photographic film cassette capable of causing a film passageway of a camera reliably to receive the film leader advanced from the cassette shell.

According to the invention the above mentioned object is achieved by a film cassette as indicated in the preamble portion of claim 1 having the characterizing features of claim 1.

According to a preferred embodiment, a film cassette further comprises: a first shell component being a molded part for constituting the cassette shell, with which at least a part of the film passage mouth is integrated; a second shell component joined to the first shell component for constituting the cassette shell; and positioning means integrated with the first shell component for positioning the cassette shell in contact with receiving means formed in a film loading chamber in a camera.

Because the spool is rotated in the axial coincidence with the rewinding shaft in accordance with the present invention, the film can be reliably advanced to the outside by slipping the outermost turn of the wound film smoothly in contact with the annular ridges. Precision in the position is improved between the film passage mouth and the positioning means even in assembly. Accordingly, the contact of the positioning means with the receiving means in the film loading chamber makes it possible to position the cassette shell precisely in the film loading chamber.

### BRIEF DESCRIPTION OF THE DRAWINGS

The above objects and advantages of the present invention will become more apparent from the following detailed description when read in connection with the accompanying drawings, in which:
Fig. 1 is a perspective view illustrating a film cassette according to a first embodiment of the present invention;
Fig. 2 is a perspective view partially illustrating a rewinding shaft for rotating the spool illustrated in Fig. 1;
Fig. 3 is a perspective view illustrating the important portion of the spool according to a variant form of the first embodiment;
Fig. 4 is a perspective view partially illustrating a rewinding shaft for rotating the spool illustrated in Fig. 3;
Fig. 5 is a section view illustrating an important portion of the film cassette illustrated in Fig. 1 and a mechanism for driving the rewinding shaft illustrated in Fig. 2;
Fig. 6 is a front view, partially cutaway, illustrating the film cassette illustrated in Fig. 1;
Fig. 7 is a perspective view illustrating a camera for use with the film cassette illustrated in Fig. 1;
Fig. 8 is a perspective view illustrating an important portion of a film cassette according to a second embodiment of the present invention;
Fig. 9 is a perspective view illustrating an important portion of a rewinding shaft for rotating the spool illustrated in Fig. 8;
Fig. 10 is a section view illustrating an important portion of a mechanism for driving the rewinding shaft illustrated in Fig. 9 and the film cassette illustrated in Fig. 8;
Fig. 11 is a perspective view illustrating an important portion of a film cassette according to a third embodiment of the present invention;
Fig. 12 is a perspective view partially illustrating an important portion of a rewinding shaft for rotating the spool illustrated in Fig. 11;
Fig. 13 is a perspective view illustrating a film cassette according to a fourth embodiment of the present invention;
Fig. 14 is a perspective view illustrating a film cassette according to a fifth embodiment of the present invention;
Fig. 15 is a perspective view illustrating an important portion of the rewinding shaft for rotating the spool illustrated in Fig. 14;

### DETAILED DESCRIPTION OF THE PREFERRED EMBODIMENTS OF THE PRESENT INVENTION

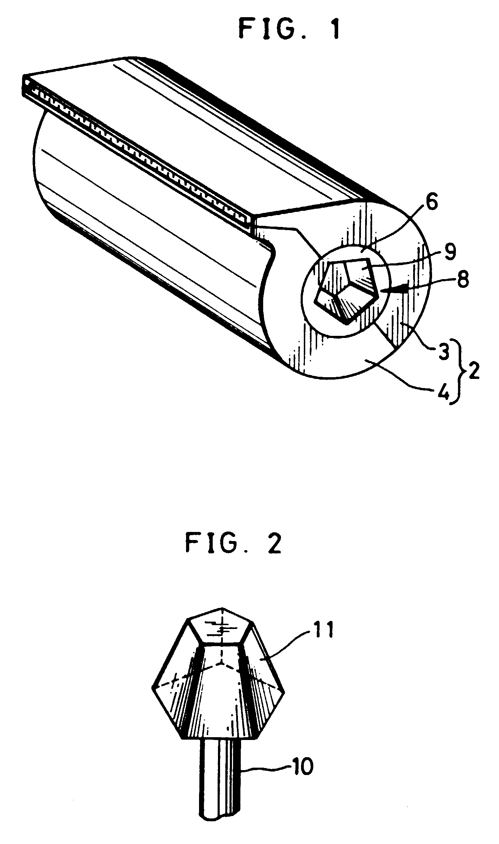

In Fig. 1 illustrating a first preferred embodiment of the inventive photographic film cassette, a cassette shell 2 consists of an upper shell half 3 and a lower shell half 4 each molded from plastics of a light-tight property, and rotatably contains a spool 6 with photographic film 5, e.g. negative film, wound thereabout. The ends of the spool 6 do not project from the cassette shell 2, but are included in the outline of the cassette shell 2 underneath so as to prevent a user from rotating the spool 6 only with his fingers.

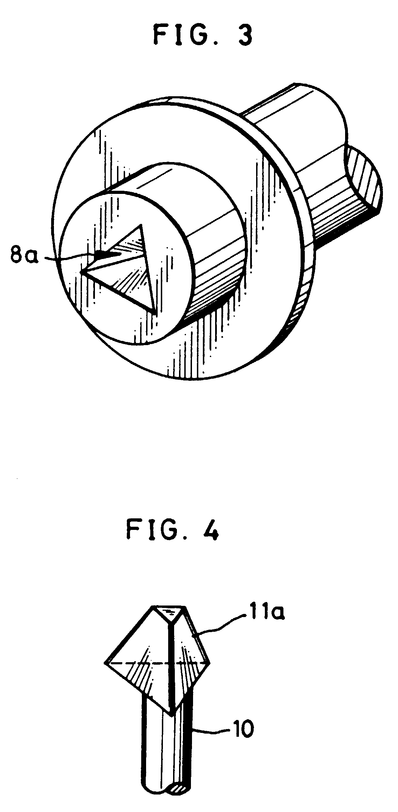

On the front end of the spool 6, a recess 8 is formed with five inclined planes 9 in the shape of a frustrum of a regular pentagonal pyramid having a decreasing space in the direction toward the inside of the recess 8. The recess 8 receives and is coupled to a coupling member 11 provided in a camera in the shape of a frustrum of a regular pentagonal pyramid, as illustrated in Fig. 2, which is formed on the tip of a rewinding shaft 10 of the camera. Although formed in the shape of a frustrum of a regular pentagonal pyramid in the present embodiment, a recess 8a may be formed in the shape of a frustrum of a regular triangular pyramid as illustrated in Fig. 3. The shape of a coupling member 11a in this case needs to be a frustrum of a regular triangular pyramid as illustrated in Fig. 4. A recess of the end of the spool 6 and a coupling member of the rewinding shaft 10 may also formed in the shape of a frustrum of another regular polygonal pyramid such as a regular quadrangular pyramid.

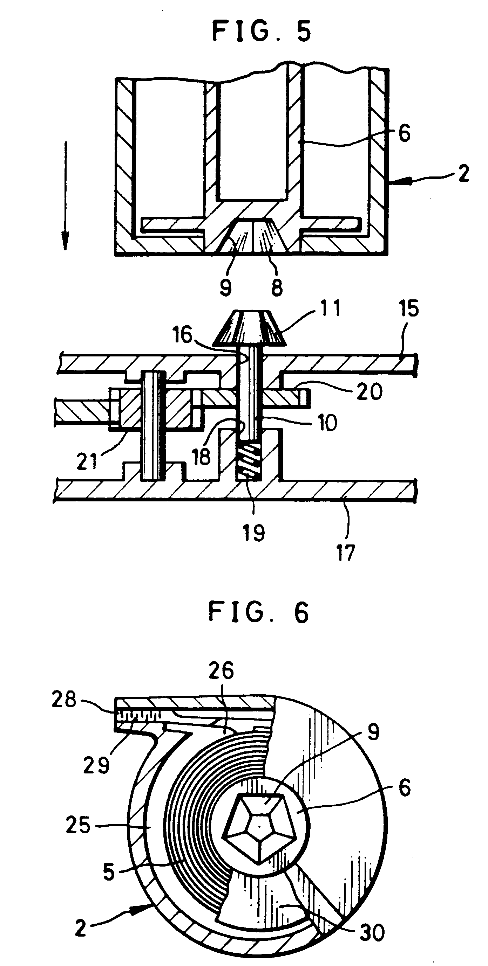

In Fig. 5, the rewinding shaft 10 is slidably inserted in a bearing hole 16 formed on an inner surface 15 of a film loading chamber of the camera. The lower end of the rewinding shaft 10 is fitted in a receiving hole 18 formed on a camera body 17. A spring 19 is inserted in the receiving hole 18, and upwardly biases the rewinding shaft 10. A gear 20 is integrated with the rewinding shaft 10 in mesh with a driving gear 21 which is driven by a driving mechanism of the camera. The lower end of the rewinding shaft 10 never slips off the receiving hole 18, because a side of the gear 20 would abut the lower portion of the bearing hole 16 even when the gear 20 slides upwardly. The driving gear 21 has a large thickness such as to prevent the gear 20 from disengaging therewith even when the rewinding shaft 10 vertically slides. Thus the driving force of the driving mechanism is reliably transmitted to the rewinding shaft 10. The driving force of the rewinding shaft 10 is transmitted to the spool 6 by the five inclined planes 9 in contact with the side faces of the coupling member 11. One fifth as large as the driving force of the rewinding shaft 10 is applied to each of the inclined planes 9.

In Fig. 6 illustrating the inside of the cassette shell 2, a pair of annular ridges 25 are formed on the inner surface of the cassette shell 2. The ridges 25 serve to press the outermost turn of the wound film 5 so as to prevent the film roll from loosening. When the spool 6 is rotated in the direction of unwinding the film 5, the leading end of the film 5 is rotated for advancing. The leading end of the film 5 is separated from the film roll by separation claws 26 formed on an end of the ridges 25, and is advanced to the outside of the cassette shell 2 through a film passage mouth 28. Plush 29 is attached to the film passage mouth 28 and shields the inside of the cassette shell 2 from external light through the film passage mouth 28. The spool 6 has a pair of flanges 30 and 31 for contact with both lateral edges of the film 5 therebetween and for shielding light in the longitudinal direction of the cassette shell 2.

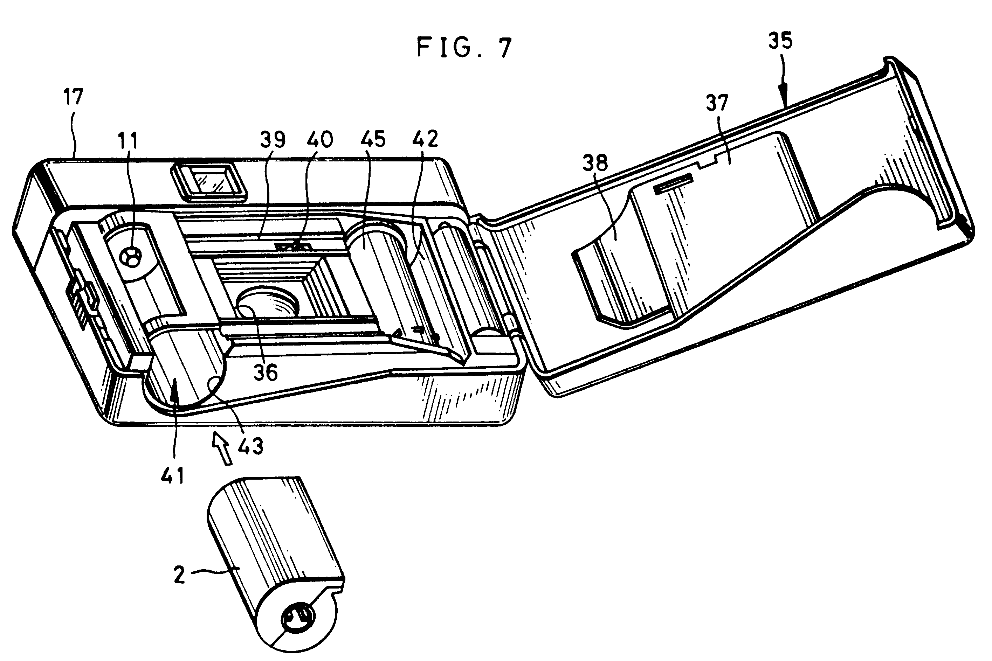

In Fig. 7 illustrating the camera to be used with the above-described film cassette, the camera body 17 with a back door 35 open is provided with an exposure aperture 36. The back door 35 is provided with a pressure plate 37 and a film guide 38. When the back door 35 is closed, the pressure plate 37 presses the film 5 positioned on the exposure aperture 36 to keep the film 5 flat, and forms a film passageway 39 in the space defined by the exposure aperture 36. A free sprocket 40 to be rotated by the film 5 through its perforations is provided on the upper side of the exposure aperture 36 in order to detect the feeding amount of the film 5.

On left and right sides of the exposure aperture 36, a film loading chamber 41 and a film take-up chamber 42 are each formed. The above coupling member 11 is exposed in the inner position of the film loading chamber 41. The cassette shell 2 having the film 5 is inserted in the camera body 17 in the direction indicated by the arrow through an opening 43 formed on the bottom of the film loading chamber 41.

There is provided a take-up spool 45 at the center of the film take-up chamber 42. The take-up spool 45 is driven by the above-described driving mechanism of the camera in order to wind up the film 5 taken up by the guide of the film guide 38.

The operation of the film cassette according to the present invention is now described. With the back door 35 open, the cassette shell 2 is inserted in the opening 43 in the direction of advancing the recess 8. The inclined planes 9 are guided by the lateral sides of the coupling member 11. Even when not fitted on the sides of the coupling member 11, the inclined planes 9 can be reliably fitted thereon by rotating the cassette shell 2 through at least 72 degrees. When the coupling member 11 is fitted in the recess 8, the attachment of the inclined planes 9 to the sides of the coupling member 11 keeps the spool 6 axially coincident with the rewinding shaft 10. It is preferable for the purpose of ensuring this operation to determine the size of the film loading chamber 41 as slightly larger than that of the cassette shell 2 in the innermost position of the film loading chamber 41. It is also preferable to provide a mechanism for supporting the cassette shell 2 with a spring in the film loading chamber 41. As the cassette shell 2 can be manually rearranged even in the lack of axial coincidence, such a mechanism makes possible the axial coincidence between the spool 6 and the rewinding shaft 11.

When the back door 35 is closed, the driving mechanism rotates the driving gear 21 and the take-up spool 45. The driving gear 21 rotates the spool 6 through a rewinding shaft 10 in the unwinding direction. The rotary axis of the spool 6 constitutes the center of the annular ridge 25 so as to prevent the outermost turn of the wound film 5 from being partially scratched by the annular ridge 25. The slipping friction between the film 5 and the annular ridge 25 is kept constant without a partially excessive increase in deviation.

Upon rotating the spool 6 in the unwinding direction, the leading end of the film 5 is advanced smoothly to the outside of the cassette shell 2 through the film passage mouth 28, and fed to the film take-up chamber 42 through the film passageway 39. When the leading end of the film 5 reaches the take-up spool 45 in rotation, the take-up spool 45 winds up the film 5 from the cassette shell 2. Upon winding up a predetermined length of the film 5, the take-up spool 45 is stopped to position a first frame at the exposure aperture 36 on standby for taking a photograph. The film 5 is thereafter wound up on the take-up spool 45 for each exposure. When the film 5 is no further fed from the cassette shell 2 upon completion of all exposures of the film 5, the driving mechanism of the camera rotates the driving gear 21 in the direction opposite to feeding the film 5. The spool 6 is rotated in the rewinding direction to rewind the film 5 from the film take-up chamber 42 into the cassette shell 2.

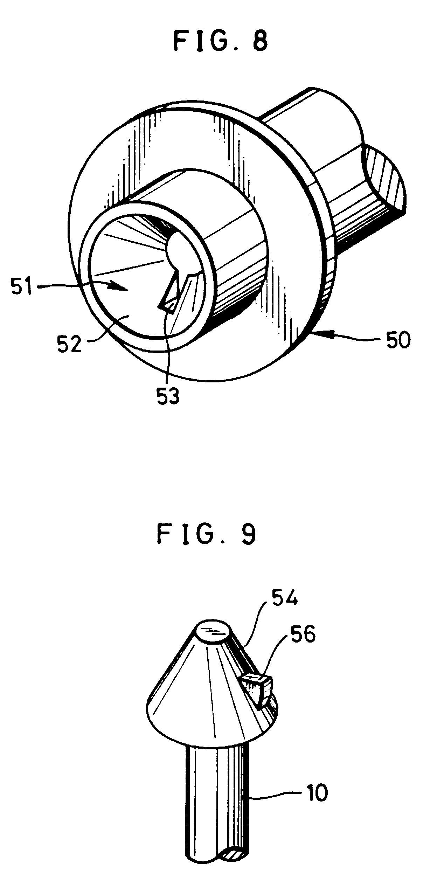

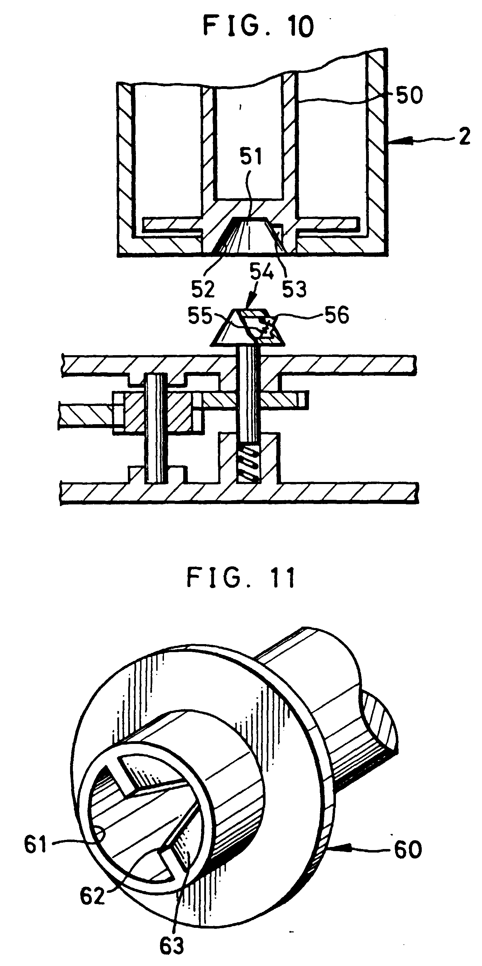

In Fig. 8 illustrating the important portion of the inventive film cassette according to a second preferred embodiment, the end of a spool 50 has a recess 51 in the shape of a frustrum of a cone, in which an arresting cutoff 53 is formed on a slope 51 defining the inner surface of the recess 51. As illustrated in Fig. 9, a coupling portion 54 is to be inserted in the recess 51. The coupling portion 54 is formed on the upper end of the rewinding shaft 10 in the shape of a frustrum of a cone corresponding to the recess 51. In Fig. 10, a metal arresting member 56 is provided on the coupling member 54 to be biased by a spring 55 so as to retractably project from the slope of the coupling member 54.

The arresting member 56 is fitted in the arresting cutoff 53 to transmit reliably the rotation of the rewinding shaft 10 to the spool 50 without slipping the coupling member 54 in the recess 51. With the coupling member 54 fitted on the spool 50, attachment of the slope 52 to the slope of the coupling member 54 makes the spool 50 axially coincident with the coupling member 54. Although engagement between the arresting member 56 and the arresting cutoff 53 transmits the rotary force of the rewinding shaft 10 to the spool 50 in the present embodiment, the rotary force may also be transmitted by engagement of a number of grooves formed on the slope 52 and the slope of the coupling member 54 in the shape similar to a bevel gear and a correspondent receiving recess.

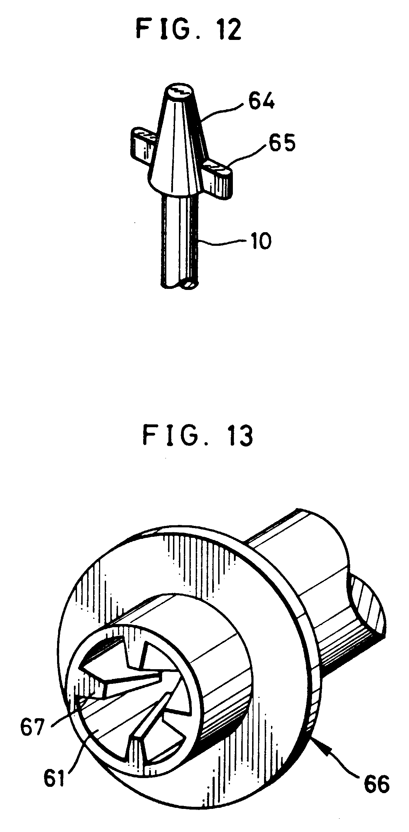

In Fig. 11 illustrating an important portion of the inventive film cassette according to a third preferred embodiment, a cylindrical recess 61 is formed on an end of a spool 60. The inner surface of the recess 61 is provided with a pair of contact plates 63 having inclined planes 62 formed thereon. The spool 60 is rotated by the rewinding shaft 10 as illustrated in Fig. 12. The tip of the rewinding shaft 10 has a coupling member 64 in the shape of a frustrum of a cone to be guided by the inclined planes 62. A pair of projections 65 are formed on the side slope of the coupling member 64 for pressing the contact plates 63. It is noted that the projections may also be provided with the coupling portion 64 to retractably project therefrom by being biased by a spring contained therein.

In Fig. 13 illustrating an important portion of the inventive film cassette according to a fourth preferred embodiment, the cylindrical recess 61 similar to that of the third embodiment is formed on the end of a spool 66. The inner surface of the recess 61 is provided with four contact plates 67 similar to the contact plates 63. The spool 66 can be rotated by the rewinding shaft 10 as illustrated in Fig. 12 having the coupling member 64. It is noted that the coupling member 64 may also have four projections like the projections 65 to transmit the rotary force of the rewinding shaft 10 in the four positions.

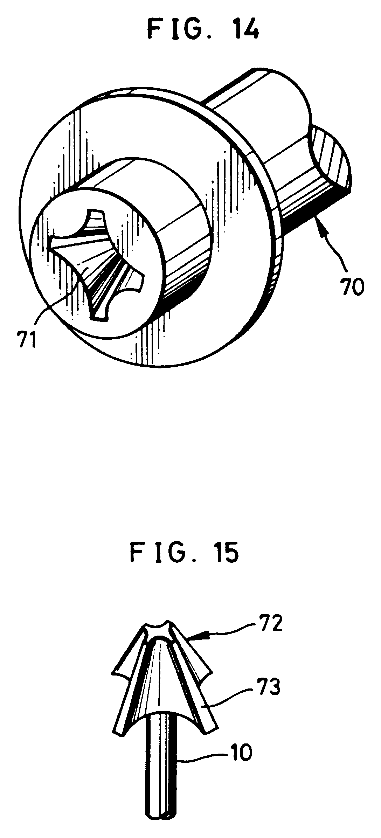

In Fig. 14 illustrating an important portion of the inventive film cassette according to a fifth embodiment, a crossed recess 71 is formed on the end of a spool 70 in the shape having a decreasing space in the direction toward the inside of the crossed recess 71. The spool 70 is rotated by the rewinding shaft 10 as illustrated in Fig. 15. The tip of the rewinding shaft 10 has a coupling member 72 in the shape the same as a tip of a cross-point screwdriver, and is provided with four radial projections 73. When the rewinding shaft 10 is inserted in the crossed recess 71 of the spool 70 thus constructed, the crossed recess 71 guides the rewinding shaft 10 therein to be fitted thereon. The coupling member 72 is in mesh by means of the four radial projections 73 upon rotating the rewinding shaft 10. The radial projections 73 equally presses the inside of the crossed recess 71 to rotate the spool 70.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. A photographic film cassette for containing photographic film (5) wound around a spool (6, 50, 60, 70) in a cassette shell (2) in light-tight fashion, in which a rotation of said spool (6, 50, 60, 70) causes a film leader to advance to the outside of said cassette shell (2), said film cassette comprising:
a receiving recess (8, 8a, 51, 61, 71) formed on an end of said spool (6, 50, 60, 70) for receiving an end of a rewinding shaft (10) provided with a camera for rotating said spool (6, 50, 60, 70) by being coupled with said spool end;
coupling means (9, 53, 63, 67, 71) formed in said receiving recess (8, 8a, 51, 61, 71) for receiving a driving force from said rewinding shaft (10),
**characterised in that**
said coupling means is provided with at least one inclined surface (9, 52, 62) defining a space narrowing in the direction towards the inside of the receiving recess (8, 8a, 51, 61, 71) and symmetrical with the axis of rotation of said spool (6, 50, 60, 70) for engaging at least one corresponding inclined surface of the rewinding shaft which is symmetrical with the axis of rotation of said rewinding shaft (10) so as to provide axial coincidence between the spool (6, 50, 60, 70) and the rewinding shaft (10).

2. A photographic film cassette as defined in claim 1, wherein said coupling means includes at least three inclined surfaces (9) that are symmetrical with the axis of rotation of said spool.

3. A photographic film cassette as defined in claim 1 or 2, wherein an annular ridge (25) is formed on an inner surface of said cassette shell (2) for being in contact with an outmost turn of said wound film (5) to prevent said film from loosening.

4. A photographic film cassette as defined in claim 1 or 2, wherein said receiving recess (8, 8a) is formed in the shape of a frustum of a polygonal pyramid, said inclined surfaces (9) being defined by lateral faces of said frustum of said polygonal pyramid.

5. A photographic film cassette as defined in claim 4, wherein said receiving recess (8) is a frustum of a pentagonal pyramid in shape.

6. A photographic film cassette as defined in claim 4, wherein said receiving recess (8a) is a frustum of a regular triangular pyramid in shape.

7. A photographic film cassette as defined in at least one of claims 1 to 3, wherein said receiving recess (51) is formed in the shape of a frustum of a cone, and said coupling means includes an arresting cutoff (53) formed in a position inside said receiving recess (51), and said inclined surface (52) is defined by a lateral side of said frustum of said cone.

8. A photographic film cassette as defined in at least one of said claims 1 to 3, wherein said receiving recess (61) is cylindrical in shape, with two contact plates (63) formed inside said receiving recess and each provided with an inclined surface (62).

9. A photographic film cassette as defined in at least one of claims 1 to 3, wherein said receiving recess (61) is cylindrical in shape with four contact plates (67) formed inside said receiving recess and each provided with an inclined surface.

10. A photographic film cassette as defined in at least one of claims 1 to 3, wherein said receiving recess (71) is a crossed recess defining an inwardly decreasing space in the shape for receiving a tip of a cross-point screwdriver with grooves of said crossed recess formed in a radial disposition defining a cross, and the inclined surface being defined by a wall defining said inwardly decreasing space.

11. A photographic film cassette as defined in at least one of claims 1 to 10 wherein said cassette shell (2) comprises a first shell component (3) being a molded part with which at least a part of a film passage mouth (28) is integrated, and a second shell component (4) joined to said first shell component (3).

12. A photographic film cassette as defined in claim 11, wherein said first and second shell components (3, 4) are shell halves joined together with reference to a juncture along a plane parallel to said spool (6, 50, 60, 70), said first and second shell halves respectively having lower and upper portions of said film passage mouth (28) formed thereon.

13. A photographic film cassette as defined in claim 12, wherein said shell halves (3, 4) are formed out of plastics of a light-tight property.

14. A photographic film cassette as defined in at least one of claims 1 to 13 wherein the ends of said spool (6, 50, 60, 70) are included in the outline of said cassette shell (2).

## Patentansprüche

1. Fotografische Filmkassette zum Aufnehmen eines lichtdicht um eine Spule in einer Kassettenhülse aufgewickelten, fotografischen Films, wobei eine Drehung der Spule (6, 50, 60, 70) bewirkt, daß sich ein Filmleitende zur Außenseite der Kassettenhülse (2) vorschiebt, wobei die Filmkassette umfaßt:
eine Aufnahmevertiefung (8, 8a, 51, 61, 71), die an einem Ende der Spule (6, 50, 60, 70) ausgebildet ist, um ein Ende einer Rückspulwelle (10) aufzunehmen, die bei einer Kamera zum Drehen der Spule (6, 50, 60, 70) durch Verbindung mit dem Spulenende vorgesehen ist;
eine Verbindungseinrichtung (9, 53, 63, 67, 71), die in der Aufnahmevertiefung (8, 8a, 51, 61, 71) vorgesehen ist, um eine Antriebskraft von der Rückspulwelle (10) aufzunehmen,
**dadurch gekennzeichnet,** daß die Verbindungseinrichtung mit mindestens einer geneigten Oberfläche (9, 52, 62) versehen ist, die einen Abstand definiert, der sich in Richtung auf die Innenseite der Aufnahmevertiefung (8, 8a, 51, 61, 71) verengt und symmetrisch ist mit der Drehachse der Spule (6, 50, 60, 70) für einen Eingriff mit mindestens einer korrespondierenden, geneigten Fläche der Rückspulwelle, die symmetrisch ist mit der Drehachse der Rückspulwelle (10), um eine axiale Ausrichtung zwischen der Spule (6, 50, 60, 70) und der Rückspulwelle (10) vorzusehen.

2. Fotografische Filmkassette gemäß Anspruch 1, wobei die Verbindungseinrichtung mindestens drei geneigte Oberflächen (9) enthält, die symmetrisch mit der Drehachse der Spule angeordnet sind.

3. Fotografische Filmkassette gemäß Anspruch 1 oder 2, wobei ein ringförmiger Steg (25) an einer inneren Oberfläche der Kassettenhülse (2) für einen Kontakt mit der äußersten Wicklung des aufgewickelten Films (5) ausgebildet ist, um zu verhindern, daß der Film locker wird.

4. Fotografische Filmkassette nach Anspruch 1 oder 2, wobei die Aufnahmevertiefung (8, 8a) in Form eines polygonalen Pyramidenstumpfs ausgebildet ist, wobei die geneigten Oberflächen (9) durch die seitlichen Stirnflächen des polygonalen Pyramidenstumpfes definiert sind.

5. Fotografische Filmkassette nach Anspruch 4, wobei die Aufnahmevertiefung (8) die Form eines pentagonalen Pyramidenstumpfes aufweist.

6. Fotografische Filmkassette nach Anspruch 4, wobei die Aufnahmevertiefung (8a) die Form eines gleichmäßigen Dreikantpyramidenstumpfes aufweist.

7. Fotografische Filmkassette nach mindestens einem der Ansprüche 1 bis 3, wobei die Aufnahmevertiefung (51) in Form eines Kegelstumpfes ausgebildet ist, und wobei die Verbindungseinrichtung einen verriegelenden Ausschnitt (53) umfaßt, der an einer Stelle innerhalb der Aufnahmevertiefung (51) ausgebildet ist, und wobei die geneigte Oberfläche (52) durch eine zur Seite weisenden Fläche des Kegelstumpfes definiert ist.

8. Fotografische Filmkassette nach mindestens einem der Ansprüche 1 bis 3, wobei die Aufnahmevertiefung (61) eine zylindrische Form aufweist, wobei zwei Kontaktplatten (62) innerhalb der Aufnahmevertiefung ausgebildet sind, von denen jede mit einer geneigten Fläche (62) versehen ist.

9. Fotografische Filmkassette nach mindestens einem der Ansprüche 1 bis 3, wobei die Aufnahmevertiefung (61) eine zylindrische Form mit vier Kontaktplatten (67) aufweist, die im Inneren der Aufnahmevertiefung ausgebildet sind, wobei jede mit einer geneigten Oberfläche versehen ist.

10. Fotografische Filmkassette nach mindestens einem der Ansprüche 1 bis 3, wobei die Aufnahmevertiefung (61) eine Kreuzvertiefung ist, die einen nach innen abnehmenden Zwischenraum in der Form zum Aufnehmen einer Spitze eines Kreuzschraubendrehers definiert, wobei Nuten in der gekreuzten Vertiefung, die in radialer Anordnung ausgebildet sind, ein Kreuz definieren, und wobei die geneigte Oberfläche durch eine den nach innen abnehmenden Spalt definierende Wand definiert ist.

11. Fotografische Filmkassette nach mindestens einem der Ansprüche 1 bis 10, wobei die Kassettenhülse (2) eine erste Hülsenkomponente (3), die ein gegossenes Teil mit mindestens einem integrierten Teil einer Filmdurchtrittsöffnung (28) ist, und eine zweite Hülsenkomponente (4) aufweist, die mit der ersten Hülsenkomponente (3) verbunden ist.

12. Fotografische Filmkassette nach Anspruch 11, wobei die erste und zweite Hülsenkomponenten (3, 4) Hülsenhälften sind, die miteinander bezüglich einer Verbindung entlang einer parallel zur Spule (6, 50, 60, 70) verlaufenden Ebene verbunden sind, wobei die ersten und zweiten Hülsenhälften jeweils angeformte obere und untere Bereiche der Filmdurchtrittsöffnung (28) haben.

13. Fotografische Filmkassette nach Anspruch 12, wobei die Hülsenshälften (3, 4) aus einem lichtdichten Kunststoff ausgebildet sind.

14. Fotografische Filmkassette nach mindestens einem der Ansprüche 1 bis 13, wobei die Enden der Spule (6, 50, 60, 70) im Umriß der Kassettenhülse (2) enthalten sind.

## Revendications

1. Bobine de film photographique contenant un film photographique (5) enroulé autour d'un axe d'enroulement (6, 50, 60, 70) dans une enveloppe de bobine (2) d'une façon étanche à la lumière, dans laquelle une rotation dudit axe d'enroulement (6, 50, 60, 70) provoque une avance de l'amorce de film vers l'extérieur de ladite enveloppe de bobine (2), ladite bobine de film comprenant :
- un creux de réception (8, 8a, 51, 61, 71) formé sur une extrémité dudit axe d'enroulement (6, 50, 60, 70) pour recevoir une extrémité d'un axe de réenroulement (10) prévu dans un appareil photo pour faire tourner ledit axe d'enroulement (6, 50, 60, 70) par couplage avec ladite extrémité d'axe;
- un moyen de couplage (9, 53, 63, 67, 71) formé dans ledit creux de réception (8, 8a, 51, 61, 71) pour recevoir un effort d'entraînement dudit axe de réenroulement (10) ;
bobine caractérisée en ce que ledit moyen de couplage est muni d'au moins une surface inclinée (9, 52, 62) définissant un espace se rétrécissant dans la direction de l'intérieur du creux de réception (8, 8a, 51, 61, 71) et symétrique avec l'axe de rotation dudit axe d'enroulement (6, 50, 60, 70) pour coopérer avec au moins une surface inclinée correspondante de l'axe de réenroulement qui est symétrique avec l'axe de rotation dudit axe de réenroulement (10) de façon à constituer une coïncidence axiale entre l'axe d'enroulement (6, 50, 60, 70) et l'axe de réenroulement (10).

2. Bobine de film photographique selon la revendication 1, dans laquelle ledit moyen de couplage comprend au moins trois surfaces inclinées (9) symétriques avec l'axe de rotation dudit axe d'enroulement.

3. Bobine de film photographique selon la revendication 1 ou 2, dans laquelle une nervure annulaire (25) est formée sur une surface interne de ladite enveloppe de bobine (2) pour être en contact avec un enroulement le plus externe dudit film de bobine (5) pour empêcher une libération dudit film.

4. Bobine de film photographique selon la revendication 1 ou 2, dans laquelle ledit creux de réception (8, 8a) est formé selon une configuration de tronc de pyramide en polygone, lesdites surfaces inclinées (9) étant définies par les faces latérales dudit tronc de pyramide en polygone.

5. Bobine de film photographique selon la revendication 4, dans laquelle ledit creux de réception (8) a la forme d'un tronc de pyramide en pentagone.

6. Bobine de film photographique selon la revendication 4, dans laquelle ledit creux de réception (8a) a la forme d'un tronc de pyramide en triangle régulier.

7. Bobine de film photographique selon au moins une des revendications 1 à 3, dans laquelle ledit creux de réception (51) présente une forme de tronc de cône et ledit moyen de couplage comprend une découpe d'arrêt (53) formée dans une position à l'intérieur dudit creux de réception (51), et ladite surface inclinée (52) est définie par un côté latérale dudit tronc de cône.

8. Bobine de film photographique selon au moins une desdites revendications 1 à 3, dans laquelle ledit creux de réception (61) possède une forme cylindrique avec deux plaques de contact (63) formées à l'intérieur dudit creux de réception et munies chacune d'une surface inclinée (62).

9. Bobine de film photographique selon au moins une des revendications 1 à 3, dans laquelle ledit creux de réception (61) possède une forme cylindrique avec quatre plaques de contact (67) formées à l'intérieur dudit creux de réception et munies chacune d'une surface inclinée.

10. Bobine de film photographique selon au moins une des revendications 1 à 3, dans laquelle ledit creux de réception (71) est un creux en croix définissant un espace diminuant vers l'intérieur sous une forme de réception de l'extrémité d'un tournevis cruciforme avec des gorges dudit creux en croix formées dans une position radiale définissant une croix, et la surface inclinée étant définie par une paroi définissant ledit espace diminuant vers l'intérieur.

11. Bobine de film photographique selon au moins une des revendications 1 à 10, dans laquelle ladite enveloppe de bobine (2) comprend un premier composant d'enveloppe (3) sous la forme d'une partie moulée à laquelle est intégrée au moins une partie d'une embouchure de passage de film (28), et un second composant d'enveloppe (4) joint audit premier composant d'enveloppe (3).

12. Bobine de film photographique selon la revendication 11, dans laquelle lesdits premier et second composants d'enveloppe (3, 4) sont des demi-coquilles jointes selon une jonction d'un plan parallèle audit axe d'enroulement (6, 50, 60, 70), lesdites première et seconde demi-coquilles possédant respectivement des parties inférieure et supérieure de ladite embouchure de passage de film (28) formées dessus.

13. Bobine de film photographique selon la revendication 12, dans laquelle lesdites demi-coquilles (3, 4) sont formées d'une matière plastique étanche à la lumière.

14. Bobine de film photographique selon au moins une des revendications 1 à 13, dans laquelle les extrémités dudit axe d'enroulement (6, 50, 60, 70) sont incluses dans le profil global de ladite enveloppe de bobine (2).
